# EUROPÄISCHE PATENTSCHRIFT

(11) **EP 2 360 011 B1**
(45) Veröffentlichungstag und Bekanntmachung des Hinweises auf die Patenterteilung: **13.03.2019**
(21) Anmeldenummer: 10450184.6
(22) Anmeldetag: 25.11.2010
(51) Int. Cl.: B29D 35/06

(54) **Verfahren zum Herstellen eines Schuhs mit einem porösen Sohlenträger für eine Kautschukschicht**
Method for producing a shoe with a porous sole holder for a rubber layer
Procédé de fabrication d'une chaussure dotée d'un support de semelle poreux pour une couche de caoutchouc

(30) Priorität: 16.02.2010 AT 2282010
(43) Veröffentlichungstag der Anmeldung: 24.08.2011
(73) Patentinhaber: Gottstein, Hansjörg, 6460 Imst (AT)
(72) Erfinder: Gottstein, Hansjörg, 6460 Imst (AT)
(74) Vertreter: Patentanwaltskanzlei Hübscher

(56) Entgegenhaltungen:
- EP-A2- 0 893 238
- FR-A- 1 018 708
- FR-A- 1 049 526
- FR-A- 1 339 392
- GB-A- 465 917

## Beschreibung

Die Erfindung bezieht sich auf ein Verfahren zum Herstellen eines Schuhs nach dem unabhängigen Anspruch 1. Merkmale der bevorzugten Ausführungsformen sind in den abhängigen Ansprüchen 2-5 offenbart.

Um textile Sohlen, beispielsweise aus Filz, insbesondere für Hausschuhe, wasserabweisend zu gestalten, ist es bekannt, die textile Sohle in ein Latexbad zu tauchen, sodass nach einem Vulkanisieren eine wasserabweisende Kautschukbeschichtung erhalten wird, die allerdings sehr dünn ausfällt, weil lediglich die Oberflächenfasern der textilen Sohle mit Kautschuk überzogen werden. Zur Vermeidung dieser Nachteile wurde bereits vorgeschlagen (EP 0 893 238 A2), auf einem textilen Sohlenträger viskoses Latexmaterial aufzubringen, das mit Hilfe einer beheizten Kontaktfläche vor oder nach dem Aufbringen auf den Sohlenträger vorvulkanisiert wird, wodurch eine durchgehende Kautschukschicht erreicht werden soll, die außerdem mit einer Oberflächenprofilierung versehen werden kann, wenn die Kontaktfläche entsprechend profiliert ausgebildet ist. Die Vorvulkanisierung des Latexmaterials vor dem Aufbringen auf den Sohlenträger macht das Beschichtungsverfahren aufwendig. Wird das Latexmaterial vor dem Vulkanisieren auf den Sohlenträger aufgebracht und mit dem Sohlenträger an die erwärmte Kontaktfläche angedrückt, so besteht die Gefahr, dass sich das noch viskose Latexmaterial in ungünstiger Weise verteilt und unter Umständen zu einer verschobenen Kautschukschicht führt, insbesondere bei vergleichsweise dünnen Kautschukschichten.

FR 1 018 708 A offenbart ein Verfahren zur Herstellung eines Schuhs, das die Vulkanisation von Gummi beinhaltet, aber die Prägung der Oberfläche mit einem Profil nach dem Vulkanisationsprozess wird nicht offenbart. FR 1 049 526 A konzentriert sich auf die Vulkanisation von Latex in einer vorgeformten Form, die das Oberflächenprofil während der Vulkanisation vorsieht. FR 1 339 392 A konzentriert sich auf einen Schuh, bei dem die Sohle durch Vulkanisation hergestellt wird, aber das Oberflächenprofil wird nicht diskutiert. GB 465 917 A konzentriert sich auf ein Verfahren zur Herstellung eines Schuhs, bei dem die Sohle mit einem Oberflächenprofil ausgebildet ist, wobei das Profil nach der Vulkanisation erhalten bleibt. Der Erfindung liegt somit die Aufgabe zugrunde, ein Verfahren der eingangs geschilderten Art zum Herstellen eines Schuhs mit einem porösen Sohlenträger für eine Kautschukschicht so auszugestalten, dass mit einem vergleichsweise geringen Herstellungsaufwand Sohlen mit einer durchgehenden, eine vorgegebene Oberflächenprofilierung aufweisenden Kautschukschicht gefertigt werden können.

Die Erfindung löst die gestellte Aufgabe dadurch, dass die Kautschukschicht nach dem Vulkanisieren erwärmt und mit einer Oberflächenprofilierung geprägt wird.

Aufgrund der erfindungsgemäß vorgenommenen Trennung der Vulkanisierung des auf den porösen Sohlenträger aufgebrachten Latexmaterials von der nachfolgenden Profilierung der vulkanisierten Kautschukschicht können für das Aufbringen des Latexmaterials auf den porösen Sohlenträger und den anschließenden Vulkanisiervorgang vorteilhafte Bedingungen für das Vulkanisieren eingehalten werden, ohne dabei auf eine Oberflächenprofilierung der Kautschukschicht Rücksicht nehmen zu müssen. Erst durch das nachträgliche Prägen der bereits vulkanisierten Kautschukschicht werden nach dem Vulkanisieren noch vorhandene, durch den porösen Sohlenträger bedingte Oberflächenstrukturen der Kautschukschicht durch die eingeprägte Profilierung der Oberfläche überlagert, sodass eine durch die eingeprägte Profilierung bestimmte, durchgehende Lauffläche aus Kautschuk sichergestellt wird. Voraussetzung für diesen Umformvorgang ist, dass die vulkanisierte Kautschukschicht für den Prägevorgang ausreichend erwärmt wird, um Vernetzungen aufgrund der Vulkanisation soweit zu lösen, dass unter Druckanwendung eine plastische Verformung möglich wird, die nach dem Abkühlen und einer damit verbundenen Zunahme der Vernetzung erhalten bleibt.

Zur Prägung der Oberflächenprofilierung kann die vulkanisierte Kautschukschicht auf dem Sohlenträger mit Hilfe eines erwärmten Prägewerkzeugs erwärmt und zugleich profiliert werden. Bessere Ergebnisse werden jedoch erhalten, wenn die Kautschukschicht nach ihrer Erwärmung unter einer Abkühlung mit der Oberflächenprofilierung geprägt wird, weil sich in diesem Fall eine nur sehr geringe Rückstellung der Oberflächenprofilierung der Kautschukschicht nach der Entformung ergibt.

Zum Prägen der Oberflächenprofilierung kann die vulkanisierte Kautschukschicht in Abhängigkeit vom eingesetzten Latexmaterial auf eine Temperatur zwischen 40 und 200° C erwärmt werden, wobei sich ein bevorzugter Temperaturbereich zwischen 100 und 140° C ergibt. Der Druck, mit dem die Oberflächenprofilierung in die Kautschukschicht eingeprägt wird, kann bis zu 60 bar betragen und liegt vorzugsweise zwischen 5 und 12 bar.

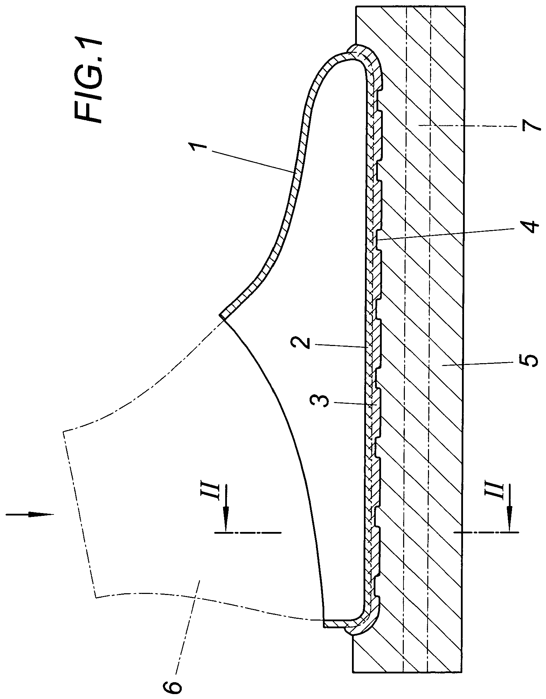

Anhand der Zeichnung wird das erfindungsgemäße Verfahren näher erläutert. Es zeigen
- Fig. 1: einen Schuh mit einem Prägewerkzeug zum Profilieren der Kautschukschicht des porösen Sohlenträgers in einem schematischem Längsschnitt und

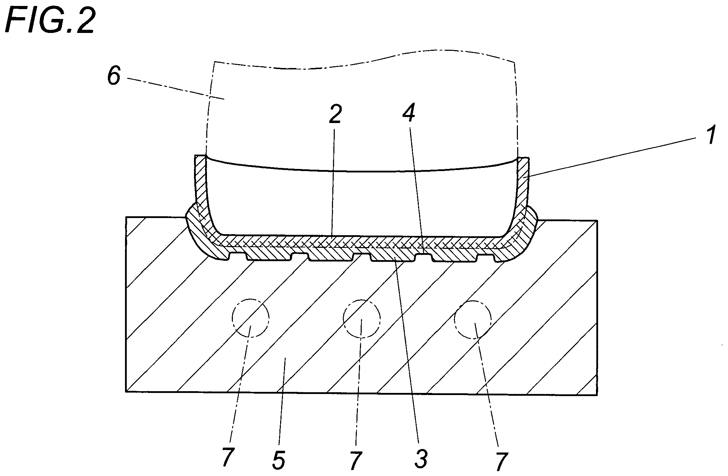

- Fig. 2: einen Schnitt nach der Linie II-II der Fig. 1 in einem größeren Maßstab.

Der dargestellte Schuh 1, ein Hausschuh, weist einen porösen Sohlenträger 2 beispielsweise aus Filz oder einem anderen textilen Material auf. Es ist aber auch möglich, ein nicht textiles poröses Material einzusetzen, weil es ja im Wesentlichen nur sicherzustellen gilt, dass das Latexmaterial zumindest teilweise in die Poren des Sohlenträgers 2 eindringt und damit eine gute Verbindung zwischen der eine durchgehende Lauffläche bildenden Kautschukschicht 3 und dem Sohlenträger 2 ergibt. Diese vulkanisierte Kautschukschicht 3, die aus Naturlatex, aus synthetischem Latex oder einer Mischung daraus hergestellt werden kann, wobei durch entsprechende Zusätze in an sich bekannter Weise Einfluss auf die Viskosität, Abriebfestigkeit und Dichte bzw. auf die Vulkanisierbedingungen genommen werden kann, ist mit einer Oberflächenprofilierung 4 versehen.

Zum Herstellen eines solchen Schuhs 1 wird zunächst auf den Sohlenträger 2 eine entsprechende Schicht eines viskosen Latexmaterials aufgebracht, wofür ein herkömmliches Tauchverfahren eingesetzt werden kann, was jedoch nicht zwingend ist. Nach einem allenfalls notwendigen Abstreifen überschüssigen Latexmaterials wird dieses teilweise in den porösen Sohlenträger 2 eingedrungene Latexmaterial durch einen geeigneten Vulkanisiervorgang vernetzt, beispielsweise in einem Trockenofen bei vorzugsweise 100° C. Die erhaltene Kautschukschicht 3 auf dem Sohlenträger 2 kann dabei eine zumindest teilweise durch das Material des Sohlenträgers 2 bestimmte Oberflächenstruktur aufweisen, die jedoch nicht erwünscht ist, weil die Kautschukschicht 3 mit einer vorgegebenen Oberflächenprofilierung 4 versehen werden soll.

Um diese Oberflächenprofilierung 4 der Kautschukschicht 3 unter einer Rückbildung der durch den Sohlenträger 2 bestimmten Strukturierung zu erreichen, wird die Kautschukschicht 3 erfindungsgemäß erwärmt, und zwar vorzugsweise auf eine Temperatur zwischen 100 und 140° C. Je tiefer die Oberflächenprofilierung 4 der Kautschukschicht 3 ausfallen soll, umso höher ist die Kautschukschicht 3 aufzuwärmen. Die erwärmte Kautschukschicht 3 wird dann mit Hilfe eines Prägewerkzeugs 5 entsprechend der Oberflächenprofilierung 4 unter einer für die Profilierung erforderlichen Druckanwendung geprägt. Damit der Prägedruck aufgebracht werden kann, kann der Schuh 1 mit einer druckübertragenden Einlage versehen werden. Im dargestellten Ausführungsbeispiel dient hiefür ein strichpunktiert angedeuteter Leisten 6. Das Prägewerkzeug 5 kühlt beim Prägen der Kautschukschicht 3 diese ab, sodass nach dem Entformen des Schuhs 1 die Oberflächenprofilierung 4 der bereits abgekühlten Kautschukschicht 3 kaum eine elastische Rückstellung erfährt. Zur besseren Wärmeabfuhr kann das Prägewerkzeug 5 mit Kühlleitungen 7 versehen sein, die in der Zeichnung strichpunktiert angedeutet sind. Der Anpressdruck der Kautschukschicht 3 an das Prägewerkzeug 5 beträgt vorzugsweise zwischen 5 und 12 bar.

Aufgrund der Erwärmung der vulkanisierten Kautschukschicht 3 und der Prägung der erwärmten Kautschukschicht 3 wird die Kautschukschicht 3 im Oberflächenbereich umgeformt, sodass sich eine durchgehende dichte, entsprechend dem eingesetzten Prägewerkzeug 5 profilierte Lauffläche für den Schuh 1 ergibt. Die Dicke der Kautschukschicht 3 wird bevorzugt zwischen 1 und 3 mm gewählt werden.

Die Erfindung ist nicht auf das dargestellte Ausführungsbeispiel begrenzt. So könnte das Prägewerkzeug 5 auch zum Erwärmen der vulkanisierten Kautschukschicht 3 herangezogen werden, wenn dieses Prägewerkzeug 5 nicht gekühlt, sondern mit einer Heizung versehen wird. Die Kautschukschicht 3 des über einen Druckübertragungskörper, beispielsweise einen Leisten 6, an das erwärmte Prägewerkzeug 5 angedrückten Schuhs 1 wird unter einer Erwärmung entsprechend profiliert, wobei nach dem Entformen des Schuhs 1 mit einer größeren Rückstellung der Oberflächenprofilierung 4 gerechnet werden muss, weil ja der profilierte Oberflächenbereich der Kautschukschicht 3 nach der Entformung während der Abkühlung frei verformbar bleibt.

## Patentansprüche

1. Verfahren zum Herstellen eines Schuhs (1) mit einem porösen Sohlenträger (2) für eine Kautschukschicht (3), wobei viskoses Latexmaterial unter einem zumindest teilweisen Eindringen in den porösen Sohlenkörper (2) auf diesen aufgebracht und anschließend vulkanisiert wird, **dadurch gekennzeichnet, dass** die Kautschukschicht (3) nach dem Vulkanisieren erwärmt und mit einer Oberflächenprofilierung (4) geprägt wird.

2. Verfahren nach Anspruch 1, **dadurch gekennzeichnet, dass** die Kautschukschicht (3) mit Hilfe eines erwärmten Prägewerkzeugs (5) erwärmt und profiliert wird.

3. Verfahren nach Anspruch 1, **dadurch gekennzeichnet, dass** die Kautschukschicht (3) nach ihrer Erwärmung unter einer Abkühlung mit der Oberflächenprofilierung (4) geprägt wird.

4. Verfahren mach einem der Ansprüche 1 bis 3, **dadurch gekennzeichnet, dass** die vulkanisierte Kautschukschicht (3) zum Prägen der Oberflächenprofilierung (4) auf eine Temperatur zwischen 40 und 200° C, vorzugsweise auf eine Temperatur zwischen 100 und 140° C, erwärmt wird.

5. Verfahren nach einem der Ansprüche 1 bis 4, **dadurch gekennzeichnet, dass** die erwärmte Kautschukschicht (3) mit einem Druck zwischen 1 und 60 bar, vorzugsweise zwischen 5 und 12 bar, geprägt wird.

## Claims

1. Method of producing a shoe (1) comprising a porous sole support (2) for a rubber layer (3), wherein viscous latex material is applied to the porous sole body (2) with at least partial penetration into said sole body and is subsequently vulcanised, **characterised in that** the rubber layer (3) is heated after vulcanisation and is embossed with a surface profile (4).

2. Method as claimed in claim 1, **characterised in that** the rubber layer (3) is heated and profiled with the aid of a heated embossing tool (5).

3. Method as claimed in claim 1, **characterised in that** after being heated the rubber layer (3) is embossed with the surface profile (4) whilst being cooled.

4. Method as claimed in any one of claims 1 to 3, **characterised in that** the vulcanised rubber layer (3) is heated to a temperature between 40 and 200°C, preferably to a temperature between 100 and 140°C, for embossing the surface profile (4).

5. Method as claimed in any one of claims 1 to 4, **characterised in that** the heated rubber layer (3) is embossed at a pressure between 1 and 60 bar, preferably between 5 and 12 bar.

## Revendications

1. Procédé permettant la fabrication d'une chaussure (1) avec un support de semelle poreux (2) pour une couche de caoutchouc (3), de la matière en latex visqueuse étant appliquée sur le corps de semelle (2), en pénétrant au moins partiellement dans ce dernier, puis, étant vulcanisée, **caractérisé en ce que** la couche de caoutchouc (3) est chauffée après la vulcanisation et gaufrée avec un profilage de surface (4).

2. Procédé selon la revendication 1, **caractérisé en ce que** la couche de caoutchouc (3) est chauffée à l'aide d'un outil de marquage (5) chauffé et profilée.

3. Procédé selon la revendication 1, **caractérisé en ce qu'**après avoir été chauffée, la couche de caoutchouc (3) est gaufrée par refroidissement avec le profilage de surface (4).

4. Procédé selon l'une des revendications 1 à 3, **caractérisé en ce que** la couche de caoutchouc (3) vulcanisée est chauffée pour gaufrage du profilage de surface (4) à une température comprise entre 40 et 200°C, de préférence à une température comprise entre 100 et 140°C.

5. Procédé selon l'une des revendications 1 à 4, **caractérisé en ce que** la couche de caoutchouc (3) chauffée est gaufrée à une pression comprise en 1 et 60 bar, de préférence entre 5 et 12 bar.
